# EUROPÄISCHE PATENTSCHRIFT

(11) **EP 3 507 246 B1**
(45) Veröffentlichungstag und Bekanntmachung des Hinweises auf die Patenterteilung: **16.07.2025**
(21) Anmeldenummer: 17808746.6
(22) Anmeldetag: 22.08.2017
(51) Int. Cl.: C01F 11/30, C05D 3/00, C05G 3/00, C01D 3/26, C05D 1/02

(54) **VERFAHREN ZUR HERSTELLUNG VON KALIUMCHLORID-GRANULATEN**
PREPARATION PROCESS FOR POTASSIUM CHLORIDE GRANULATES
PROCÉDÉ DE PRÉPARATION DE GRANULATS DE CHLORURE DE POTASSIUM

(30) Priorität: 02.09.2016 DE 102016010585
(43) Veröffentlichungstag der Anmeldung: 10.07.2019
(73) Patentinhaber: K+S Aktiengesellschaft, 34131 Kassel (DE)
(72) Erfinder: BAUCKE, Guido, 36277 Schenklengsfeld OT Wippershain (DE); DIETRICH, Armin, 37299 Weißenborn (DE); DRESSEL, Stefan, 34128 Kassel (DE); KOPF, Sebastian, 36433 Bad Salzungen (DE); MEISSNER, Paul, 39110 Magdeburg (DE); WALCZYK, Wolfgang, 36266 Heringen OT Herfa (DE); WALDMANN, Ludger, 48291 Telgte (DE)
(74) Vertreter: Meissner Bolte Partnerschaft mbB
(86) Internationale Anmeldenummer: PCT/DE2017/000258
(87) Internationale Veröffentlichungsnummer: WO 2018/041286

(56) Entgegenhaltungen:
- DE-A1- 2 748 220
- US-A- 3 197 302
- US-A- 4 385 920
- US-A1- 2005 036 929
- US-B2- 8 685 135

## Beschreibung

Die vorliegende Erfindung betrifft ein Verfahren zur Herstellung von Kaliumchlorid-Granulaten aus einem kristallinen Kaliumchlorid-Rohmaterial, beispielsweise aus einem durch Flotation, Eindampfung, Kristallisation, der Solarevaporation oder durch ein Heißlöseverfahren gewonnenen kristallinen Kaliumchlorid. Die Erfindung betrifft auch die nach dem Verfahren erhältlichen Kaliumchlorid-Granulate.

Kaliumchlorid ist ein wichtiger Bestandteil landwirtschaftlicher Düngemittel. Kaliumchlorid wird üblicherweise in untertägigen Bergwerken durch konventionellen Abbau, durch Solution Mining (Solungsbergbau) oder durch Solareindampfung von Salzwässern gewonnen. Das so gewonnene Kaliumchlorid wird dann zu den gewünschten Anwendungsformen weiterverarbeitet.

Kaliumchlorid wird häufig in Form von Granulaten vermarktet, da diese vorteilhafte Handhabungseigenschaften aufweisen. So neigen Granulate im Vergleich zu feinteiligem kristallinen Kaliumchlorid in sehr viel geringerem Maße zur Staubbildung, sind lagerstabiler, neigen weniger zum Verbacken und lassen sich bei Anwendung als Düngemittel leichter und gleichmäßiger durch Streuen ausbringen. Die Qualität der Kaliumchlorid-Granulate und damit der am Markt erzielbare Preis hängen sowohl von der Reinheit wie auch von der Granulat-Qualität ab.

Das bei der bergmännischen Gewinnung von Kaliumchlorid anfallende, kristalline Kaliumchlorid-Rohmaterial weist üblicherweise Partikelgrößen auf, die deutlich unterhalb der gewünschten Granulat-Größe liegen. Zur Herstellung der Granulate werden die Kaliumchlorid-Rohmaterialien einem üblichen Granulierverfahren unterworfen, bei dem die feinteiligen kristallinen Kaliumchlorid-Partikel des Rohmaterials unter Kornvergrößerung zusammengelagert (agglomeriert) werden.

Übliche Granulierverfahren für die Herstellung von Kaliumchlorid-Granulaten sind die Pressagglomeration und die Aufbauagglomeration. Bei der Aufbauagglomeration von Kaliumchlorid wird das feinteilige Ausgangsmaterial unter Zusatz einer wässrigen Flüssigkeit intensiv bewegt, sodass es zu zahlreichen Zusammenstößen zwischen den Primärpartikeln kommt, die sich dann aufgrund der durch die Flüssigkeit vermittelten Kapillarkräfte in Form von Aggregaten zusammenlagern. Diese Aggregate können sich dann untereinander oder mit weiteren Primärpartikeln zusammenlagern. Die ständige Bewegung führt zu einem fortwährenden Aufbau von Partikelschichten und zur Verdichtung der Partikel, sodass man am Ende feuchte Granulate (Grüngranulat) der gewünschten Größe erhält, die dann zum fertigen Granulat getrocknet und ausgehärtet werden. Bei der Pressagglomeration von Kaliumchlorid wird das feinteilige Ausgangsmaterial, durch Anwendung von Druck verdichtet, sodass teilweise sehr hohe Kräfte auf die Primärpartikel wirken. Hierdurch kommt es zu Verformungen der Primärpartikel im Kontaktbereich, beispielsweise durch plastische Verformung, welche die Haftung der Primärpartikel untereinander beträchtlich verstärken. In Folge von Reibungswärme können auch örtlich Sintervorgänge auftreten, sodass sich Festkörperbrücken zwischen den Primärpartikeln bilden.

Der eigentlichen Agglomeration schließt sich, gegebenenfalls nach Trocknung des feuchten Granulates, eine Klassierung des primär erhaltenen Granulates an, bei dem das Primärgranulat in Fraktionen der gewünschten Partikelgröße aufgetrennt wird.

Kaliumchlorid-Granulate sind in der Regel mechanisch instabil. Bei Einwirkung mechanischer Kräfte, wie sie bei der Handhabung, bei der Lagerung oder insbesondere auch beim Transport auftreten, werden die Granulat-Partikel beschädigt. Dies führt zum einen zu einer Verringerung des Partikeldurchmessers der Granulat-partikel und einer damit einhergehenden Wertminderung und zum anderen zu einer nicht unbeträchtlichen Bildung von feinteiligen Partikeln. Diese feinteiligen Partikel können bei der Lagerung und Handhabung der Granulate zu Problemen führen, indem sie beispielsweise stauben oder bei Feuchtigkeit ein Verbacken der Granulat-Partikel verursachen.

Zur Verbesserung der mechanischen Stabilität der Granulate werden bei den vorgenannten Granulierverfahren häufig Bindemittel eingesetzt, welche die Haftkräfte zwischen den Partikeln und damit einen Zusammenhalt der Partikel im Granulat verbessern. Typische Bindemittel sind Gelatine, Stärke, Melasse, Ligninsulfonate, Kalk und Tonmineralien. Die Wahl des Bindemittels wird in der Regel die Eigenschaften des Granulates, insbesondere seine mechanische Festigkeit (Abrieb, Härte), seine hygroskopischen Eigenschaften und seine Staubneigung maßgeblich beeinflussen. Kaliumchlorid-Granulate weisen jedoch auch bei Einsatz von derartigen, konventionellen Bindemitteln üblicherweise nur eine unzureichende mechanische Stabilität auf, sodass die oben genannten Probleme auftreten.

Die SU 990755 beschreibt ein Verfahren zur Herstellung von Kaliumchlorid-Granulaten durch ein Pressagglomerationsverfahren, bei dem man dem Kaliumchlorid-Ausgangsmaterial Natriumpolyphosphat in einer Menge von 0,2 bis 1 Gew.-% bezogen auf Kaliumchlorid zusetzt.

Die RU 2083536 beschreibt ein Verfahren zur Herstellung von Kaliumchlorid-Granulaten durch Pressagglomeration von Kaliumchlorid-Rohmaterial, bei dem der bei der Pressagglomeration anfallende Kaliumchlorid-Staub mit einer wässrigen Lösung von Natrium-Metasilikat versetzt wird und dem zur Kompaktierung eingesetzten Kaliumchlorid-Rohmaterial zugesetzt wird.

Die US 4,385,020 beschreibt ein Verfahren zur Herstellung von Kaliumchlorid-Granulaten, bei dem Kaliumchlorid mit einem Phosphat-Bindemittel in einem Trommel- oder Tellergranulator zu einem Kaliumchlorid-Granulat verarbeitet wird.

Die DE 10252848 beschreibt ein Verfahren zu Herstellung von Kalidüngemittel-Granulaten, bei dem ein Kalidüngemittel-Rohgranulat mit einer Silikat- oder Carbonathaltigen Lösung behandelt wird. Anschließend wird das so behandelte Granulat mit kinetischer Energie in Form von Vibrationen behandelt. Das so erhaltene Granulat wird zur Verbesserung der Beständigkeit gegenüber Luftfeuchtigkeit mit einer wasserabweisenden Substanz, beispielsweise mit Palmitin, beschichtet.

Die CA 2,465,461 beschreibt ein Verfahren zur Herstellung von Kaliumchlorid-Granulaten durch ein Pressagglomerationsverfahren, bei dem man dem Kaliumchlorid vor seiner Kompaktierung Hexanatriummetaphosphat (SHMP), Tetranatriumpyrophosphat bzw. Trinatriumphosphat als Bindemittel zusetzt. Das SHMP soll dazu dienen, die Feuchtigkeit sowie die im Kaliumchlorid enthaltenen Magnesium- und Calcium-Salze zu binden und damit die mechanische Festigkeit, insbesondere beim Transport, zu verbessern.

Die US 2005/036929 A1 beschreibt ein Verfahren zur Herstellung von Kaliumchlorid-Granulaten durch Kompaktieren eines Kaliumchlorid-Rohmaterials, dem zuvor Natriumhexametaphosphat als Bindemittel beigemischt worden ist.

Die mechanischen Eigenschaften der aus dem Stand der Technik bekannten Kaliumchlorid-Granulate sind jedoch trotz dieser Bindemittel nicht zufriedenstellend, insbesondere wenn die Kaliumchlorid-Granulate über einen längeren Zeitraum einer Atmosphäre mit erhöhter Luftfeuchtigkeit ausgesetzt sind. Insbesondere zeichnen sich die bekannten Kaliumchlorid-Granulate nach Lagerung bei erhöhter Luftfeuchtigkeit durch eine unzureichende Bruch- bzw. Berstfestigkeit und einen nicht zufriedenstellenden Abrieb aus.

Der vorliegenden Erfindung liegt somit die Aufgabe zugrunde, Kaliumchlorid-Granulate mit verbesserter mechanischer Festigkeit, insbesondere einer hohen Bruch- bzw. Berstfestigkeit und zufriedenstellenden Abriebswerten bereitzustellen. Insbesondere sollten die Kaliumchlorid-Granulate auch nach längerer Einwirkung von hoher Luftfeuchtigkeit, zum Beispiel einer Luftfeuchtigkeit bei 70 % RH (relative Luftfeuchte) oder höher, oder anderer Feuchtigkeitseinwirkung in Folge von Bewetterung noch zufriedenstellende bzw. gute mechanische Eigenschaften aufweisen, d.h. die Bruch- bzw. Berstfestigkeiten sollten auch bei hoher Luftfeuchtigkeit hoch sein und die Feuchteaufnahme sollte gering sein.

Es wurde überraschenderweise gefunden, dass diese Aufgaben dadurch gelöst werden können, dass man ein kristallines Kaliumchlorid-Rohmaterial in Gegenwart von Wasser, zum Beispiel in Form eines filterfeuchten Feinsalzes, vor der Granulierung mit wenigstens einem Alkalimetallcarbonat und wenigstens einem Phosphat-Additiv behandelt, wobei der Gehalt an Wasser während der Behandlung im Bereich von 2 bis 15 Gew.-%, bezogen auf die festen Bestandteile des Kaliumchlorid-Rohmaterials, liegt und man das Alkalimetallcarbonat in einer Menge von 0,05 bis 1 Gew.-% und das Phosphat-Additiv in einer Menge von 0,025 bis 2 Gew.-%, bezogen auf die festen Bestandteile des Kaliumchlorid-Rohmaterials, einsetzt. Durch die Kombination von wenigstens einem Alkalimetallcarbonat und wenigstens einem Phosphat-Additiv, ausgewählt unter Alkalimetallmonophosphaten, Alkalimetallpyrophosphaten, linearen Alkalimetallpolyphosphaten sowie deren Gemischen, wird die Bruch- bzw. Berstfestigkeit bei höheren Luftfeuchtigkeiten von beispielsweise 70% RH oder höher deutlich erhöht und die Feuchteaufnahme der Kaliumchlorid-Granulate verringert.

Dementsprechend betrifft die vorliegende Erfindung ein Verfahren zur Herstellung von Kaliumchlorid-Granulaten aus einem kristallinen Kaliumchlorid-Rohmaterial, bei dem man das Kaliumchlorid-Rohmaterial vor der Granulierung mit wenigstens einem Alkalimetallcarbonat und wenigstens einem Phosphat-Additiv, das ausgewählt ist unter Alkalimetallmonophosphaten, Alkalimetallpyrophosphaten, linearen Alkalimetallpolyphosphaten und deren Gemischen, in Gegenwart von Wasser behandelt,
wobei der Gehalt an Wasser während der Behandlung des kristallinen Kaliumchlorid-Rohmaterials mit dem Alkalimetallcarbonat und dem Phosphat-Additiv im Bereich von 2 bis 15 Gew.-%, bezogen auf die festen Bestandteile des Kaliumchlorid-Rohmaterials, liegt, und
wobei man das Alkalimetallcarbonat in einer Menge von 0,05 bis 1 Gew.-% und das Phosphat-Additiv in einer Menge von 0,025 bis 2 Gew.-%, bezogen auf die festen Bestandteile des Kaliumchlorid-Rohmaterials, einsetzt.

Bevorzugte Ausgestaltungen des erfindungsgemäßen Verfahrens sind in den Unteransprüchen und im Folgenden beschrieben.

Die erfindungsgemäß erhältlichen Kaliumchlorid-Granulate zeichnen sich im Vergleich zu Kaliumchlorid-Granulaten aus einem unbehandelten kristallinen Kaliumchlorid-Rohmaterial und ebenso gegenüber Kaliumchlorid-Granulaten aus einem Kaliumchlorid-Rohmaterial, das nur mit einem Additiv, also entweder mit dem Alkalimetallcarbonat oder mit dem Phosphat-Additiv, vor der Granulierung behandelt wurde, durch eine höhere mechanische Festigkeit, insbesondere durch eine höhere Bruch- bzw. Berstfestigkeit aus. Zudem zeichnen sich die Granulate durch einen geringen Abrieb aus. Die vorteilhafte mechanische Festigkeit kommt insbesondere dann zum Tragen, wenn das Kaliumchlorid-Granulat Feuchtigkeit in Folge einer Bewetterung, z. B. einer Atmosphäre mit erhöhter Luftfeuchtigkeit, insbesondere einer Luftfeuchtigkeit bei 70 % RH oder höher, ausgesetzt ist. Dies ist vor allem deswegen überraschend, weil die alleinige Behandlung mit Alkalimetallcarbonat zu keiner signifikanten Verbesserung der Bruch- bzw. Berstfestigkeitswerte bewetterter Granulate führt.

Dementsprechend betrifft die vorliegende Erfindung auch die nach dem erfindungsgemäßen Verfahren erhältlichen Kaliumchlorid-Granulate.

Die Erfindung betrifft auch die Verwendung einer Kombination aus wenigstens einem Alkalimetallcarbonat, wenigstens einem Phosphat-Additiv und Wasser zur Erhöhung der Bruch-/Berstfestigkeit und der Verringerung der Feuchteaufnahme von Kaliumchlorid-Granulaten.

Die vorliegende Erfindung betrifft weiterhin die Verwendung einer Kombination aus wenigstens einem Alkalimetallcarbonat, wenigstens einem Phosphat-Additiv und Wasser zur Erhöhung der Bruch- bzw. Berstfestigkeit von Kaliumchlorid-Granulaten, die einer Luftfeuchtigkeit bei bzw. größer 70 % RH ausgesetzt sind.

In dem erfindungsgemäßen Verfahren setzt man ein kristallines Kaliumchlorid-Rohmaterial als Ausgangsmaterial ein. Dieses kristalline Kaliumchlorid-Rohmaterial wird im Folgenden auch als Feinsalz bezeichnet. Das kristalline Kaliumchlorid-Rohmaterial besteht im Wesentlichen, d. h. in der Regel zu wenigstens 90 Gew.-%, häufig zu wenigstens 95 Gew.-%, insbesondere zu wenigstens 98 Gew.-% und speziell zu wenigstens 99 Gew.-% oder zu wenigstens 99,5 Gew.-%, bezogen auf die festen Bestandteile des kristallinen Kaliumchlorid-Rohmaterials, aus Kaliumchlorid. Der Kalium-Gehalt des Kaliumchlorid-Rohmaterials, gerechnet als K₂O, liegt üblicherweise bei wenigstens 56,9 Gew.-%, häufig bei wenigstens 60,0 Gew.-%, insbesondere bei wenigstens 61,9 Gew.-% und speziell bei wenigstens 62,5 Gew.-%, bezogen auf die festen Bestandteile des Kaliumchlorid-Rohmaterials.

Je nach Herkunft enthält das Kaliumchlorid-Rohmaterial die hierfür typischen Verunreinigungen, insbesondere Natrium-Salze und Erdalkalimetallsalze, vor allem Magnesium-Salze und/oder Calcium-Salze. Es ist anzunehmen, dass diese Verunreinigungen, insbesondere die Magnesium- und Calcium-Salze zu den beobachteten Stabilitätsproblemen der Granulate führen, insbesondere wenn die Granulate hoher Luftfeuchtigkeit ausgesetzt sind. Häufig enthält das eingesetzte Kaliumchlorid-Rohmaterial Erdalkalimetallsalze, z. B. Calcium- und/oder Magnesium-Salze, in einer Gesamtmenge von 0,01 bis 1,0 Gew.-% insbesondere 0,05 bis 0,7 Gew.-%, jeweils gerechnet als Erdalkalimetallchlorid, z. B. als MgCl₂ bzw. CaCl₂, und bezogen auf das im Rohmaterial enthaltene Kaliumchlorid (KCl).

Bei dem zur Herstellung der Granulate eingesetzten Kaliumchlorid-Rohmaterial handelt es sich üblicherweise um ein bergmännisch abgebautes, bzw. über Solareindampfung oder Solution Mining gewonnenes kristallines Kaliumchlorid, das beispielsweise durch Flotation, durch Eindampfung, Kristallisation und/oder durch ein Heißlöseverfahren oder durch eine Kombination dieser Maßnahmen, aufbereitet wurde. Im erfindungsgemäßen Verfahren kann dem Kaliumchlorid-Rohmaterial zusätzlich auch weiteres Kaliumchlorid zugemischt werden. Dabei handelt es sich zum Beispiel um ein bei der Klassierung der erfindungsgemäßen Kaliumchlorid-Granulate anfallendes Rückgut, das gegebenenfalls zerkleinert wurde. In diesen Gemischen aus Kaliumchlorid-Rohmaterial und weiterem Kaliumchlorid wird der Anteil an weiterem Kaliumchlorid, z. B. dem Rückgut, in der Regel im Bereich von 1 bis 70 Gew.-%, bezogen auf die Gesamtmasse der zur Granulierung aufgegebenen Menge, liegen.

Anstelle eines frisch aufbereiteten Feinsalzes/Kaliumchlorid-Rohmaterials kann auch ein bereits konfektioniertes Feinsalz zur Granulierung eingesetzt werden, beispielsweise ein konfektioniertes Feinsalz mit einem Kalium-Gehalt von wenigstens 60 Gew.-%, bezogen auf die Trockenbestandteile und gerechnet als K₂O.

In der Regel liegt das Kaliumchlorid-Rohmaterial in Form feiner kristalliner Salzpartikel vor. Neben den Kristallpartikeln kann das Kaliumchlorid-Rohmaterial auch gröbere Partikel, z. B. aus dem Rückgut, enthalten. Üblicherweise wird ein Kaliumchlorid-Rohmaterial eingesetzt, worin wenigstens 90 Gew.-% der Partikel des Kaliumchlorid-Rohmaterials eine Partikelgröße von maximal 2 mm aufweisen. Insbesondere weisen 90 Gew.-% der Partikel des Kaliumchlorid-Rohmaterials eine Partikelgröße im Bereich von 0,01 bis 2 mm auf.

Erfindungsgemäß wird das Kaliumchlorid-Rohmaterial vor der Granulierung mit wenigstens einem Phosphat-Additiv und wenigstens einem Alkalimetallcarbonat in Gegenwart von Wasser behandelt. Alkalimetallcarbonat und Phosphat-Additiv werden im Folgenden auch als Additive bezeichnet.

Die Behandlung des Kaliumchlorid-Rohmaterials mit Alkalimetallcarbonat und Phosphat-Additiv kann gleichzeitig oder sukzessive erfolgen. Bei gleichzeitiger Zugabe, können das Alkalimetallcarbonat und Phosphat-Additiv separat oder als Vormischung zugegeben werden.

Beispiele für geeignete Alkalimetallcarbonate sind Natriumcarbonat und Kaliumcarbonat, die in wasserfreier Form oder in Form ihrer Hydrate eingesetzt werden können. Insbesondere ist das Alkalimetallcarbonat ausgewählt unter Natriumcarbonat-wasserfrei (Na₂CO₃), Natriumcarbonat-Monohydrat (Na₂CO_{3 *} H₂O) und Natriumcarbonat-Decahydrat (Na₂CO_{3 *} 10 H₂O) und deren Gemischen. Besonders bevorzugtes Alkalimetallcarbonat ist das Natriumcarbonat-wasserfrei.

Geeignete Phosphat-Additive sind solche der Formel Mₙ₊₂PₙO₃ₙ₊₁, worin M für ein Alkalimetallkation, z.B. Na oder K, steht und n für 1 - 100, insbesondere für 1, 2 oder 3 steht, nämlich Alkalimetallmonophosphate (n = 1), Alkalimetallpyrophosphate (n = 2) und lineare Alkalimetallpolyphosphate (n > 2). Bevorzugt sind die entsprechenden Natriumverbindungen, d.h. M steht für Natrium. Beispiele für bevorzugte Phosphat-Additive sind vor allem Trinatriumphosphat, Trinatriumphosphat-Dodecahydrat, Trinatriumphosphat-Hexahydrat, Natriumpyrophosphat (wasserfrei), Natriumpyrophosphat-Dodecahydrat, Natriumtripolyphosphat (STPP) sowie Gemischen daraus. Besonders bevorzugtes Phosphat-Additiv ist das Trinatriumphosphat. Anstelle der vorgenannten Natriumverbindungen ist auch die Verwendung von Phosphat-Additiven möglich, in denen Natriumionen vollständig oder teilweise durch Kalium ersetzt sind.

In dem erfindungsgemäßen Verfahren setzt man das Alkalimetallcarbonat in einer Menge von 0,05 bis 1 Gew.-% und speziell in einer Menge von 0,1 bis 0,7 Gew.-%, bezogen auf die festen Bestandteile des Kaliumchlorid-Rohmaterials, ein. Insbesondere richtet sich die Einsatzmenge an Alkalimetallcarbonat nach den im Kaliumchlorid-Rohmaterial enthaltenen Erdalkalimetallsalzen.

In dem erfindungsgemäßen Verfahren setzt man das Phosphat-Additiv in einer Menge von 0,025 bis 2 Gew.-%, insbesondere in einer Menge von 0,05 bis 1,5 Gew.-% und speziell in einer Menge von 0,07 bis 0,4 Gew.-%, bezogen auf die festen Bestandteile des Kaliumchlorid-Rohmaterials, ein. Insbesondere richtet sich die Einsatzmenge an Phosphat-Additiv nach dem Gehalt an enthaltenen Erdalkali-metallsalzen im Kaliumchlorid-Rohmaterial.

Wesentlich ist, dass die Behandlung des Kaliumchlorid-Rohmaterials mit dem Alkalimetallcarbonat und dem Phosphat-Additiv in Gegenwart von Wasser erfolgt. Hierbei kann es sich um Wasser handeln, das aus der Aufbereitung des Kaliumchlorid-Rohmaterials stammt, beispielsweise den Kaliumchloridpartikeln anhaftendes oder darin eingeschlossenes Wasser, oder dem Kristallwasser, und/oder um Wasser, welches dem Kaliumchlorid-Rohmaterial vor oder während der Zugabe von Alkalimetallcarbonat bzw. Phosphat-Additiv zugesetzt wurde. Der Gesamtgehalt an Wasser im Kaliumchlorid-Rohmaterial liegt während der Behandlung mit dem Alkalimetallcarbonat und dem Phosphat-Additiv im Bereich von 2 bis 15 Gew.-%, insbesondere im Bereich von 4 bis 9 Gew.-%, jeweils bezogen auf die festen Bestandteile des Kaliumchlorid-Rohmaterials. Sofern der Gesamtwassergehalt im Kaliumchlorid-Rohmaterial vor der Behandlung mit dem Alkalimetallcarbonat und dem Phosphat-Additiv weniger als 2 Gew.-%, bezogen auf die festen Bestandteile des Kaliumchlorid-Rohmaterials, beträgt, wird man ihn z. B. vor oder während der Behandlung durch Zusatz von Wasser auf einen Wert von wenigstens 2 Gew.-%, jeweils bezogen auf die festen Bestandteile des Kaliumchlorid-Rohmaterials, erhöhen.

Häufig wird man so vorgehen, dass man ein feuchtes Kaliumchlorid-Rohmaterial einsetzt, das bereits den gewünschten Wassergehalt aufweist. Gegebenenfalls wird der Wassergehalt des Kaliumchlorid-Rohmaterials vor oder während der Behandlung mit dem Alkalimetallcarbonat und dem Phosphat-Additiv auf diese Werte eingestellt.

Bei der Behandlung des Kaliumchlorid-Rohmaterials können das wenigstens eine Alkalimetallcarbonat und das wenigstens eine Phosphat-Additiv dem Kaliumchlorid-Rohmaterial gleichzeitig oder sukzessive zugesetzt werden. Dabei ist es grundsätzlich unerheblich, ob man zunächst Alkalimetallcarbonat und dann das Phosphat-Additiv dem Kaliumchlorid-Rohmaterial zusetzt oder umgekehrt oder ob man Alkalimetallcarbonat und Phosphat-Additiv gleichzeitig dem Kaliumchlorid-Rohmaterial zusetzt. Wesentlich ist, dass der Zusatz von Alkalimetallcarbonat und Phosphat-Additiv vor der Granulierung und in Gegenwart ausreichender Menge an Wasser erfolgt. Sofern vor der Granulierung eine Trocknung des Kaliumchlorid-Rohmaterials erfolgt, werden Alkalimetallcarbonat und Phosphat-Additiv und ggf. Wasser typischerweise vor der Trocknung dem Kaliumchlorid-Rohmaterial zugesetzt.

Häufig wird man so vorgehen, dass man das Additiv Alkalimetallcarbonat und das Phosphat-Additiv dem feuchten Kaliumchlorid-Rohmaterial zusetzt und dann das so behandelte feuchte Kaliumchlorid-Rohmaterial, d.h. behandeltes feuchtes Feinsalz, vor der Granulierung trocknet, insbesondere wenn die Granulierung durch Pressgranulierung erfolgt. Insbesondere erfolgt die Trocknung bis zu einem Wassergehalt von maximal 1 Gew.-%, bezogen auf die festen Bestandteile in dem so behandelten Kaliumchlorid-Rohmaterial. Anschließend führt man dann die Granulierung durch. Das so behandelte und getrocknete Kaliumchlorid-Rohmaterial kann auch vor der Granulierung gelagert werden.

Zur Behandlung des Kaliumchlorid-Rohmaterials mit dem wenigstens einen Alkalimetallcarbonat wird man das Alkalimetallcarbonat in der Regel in Form eines Pulvers und/oder in Form einer wässrigen Lösung einsetzen. Sofern man das Alkalimetallcarbonat in Form eines Pulvers einsetzt, wird die Partikelgröße des Pulvers in der Regel 1 mm und insbesondere 0,5 mm nicht überschreiten. Ist der Gesamtwassergehalt des Kaliumchlorid-Rohmaterials nicht ausreichend, so ist die Zugabe von Alkalimetallcarbonat als Lösung ebenfalls möglich.

Zur Behandlung des Kaliumchlorid-Rohmaterials mit dem wenigstens einen Phosphat-Additiv wird man das Phosphat-Additiv in der Regel in Form eines Pulvers und/oder in Form einer wässrigen Lösung einsetzen. Sofern man das Phosphat-Additiv in Form eines Pulvers einsetzt, wird die Partikelgröße des Pulvers in der Regel 1 mm und insbesondere 0,5 mm nicht überschreiten. Ist der Gesamtwassergehalt des Kaliumchlorid-Rohmaterials nicht ausreichend, so ist die Zugabe von Phosphat-Additiv als Lösung ebenfalls möglich.

Zur Behandlung des Kaliumchlorid-Rohmaterials mit dem Alkalimetallcarbonat und dem Phosphat-Additiv wird man üblicherweise das Alkalimetallcarbonat bzw. das Phosphat-Additiv mit dem Kaliumchlorid-Rohmaterial in der gewünschten Menge vermischen. Wie bereits zuvor gesagt, muss dieses Vermischen vor der Granulierung erfolgen. Dabei sollte der Gesamtwassergehalt im feuchten Kaliumchlorid-Rohmaterial während der Zugabe von Alkalimetallcarbonat und Phosphat-Additiv im Bereich von 2 bis 15 Gew.-% und speziell im Bereich von 4 bis 9 Gew.-%, jeweils bezogen auf die festen Bestandteile des Kaliumchlorid-Rohmaterials, liegen, bzw. auf diese Werte eingestellt werden. Insbesondere wird man das Alkalimetallcarbonat dem feuchten Kaliumchlorid-Rohmaterial (d.h. dem feuchten Feinsalz) vor der Trocknung zusetzen. In einer speziellen Ausführungsform wird man sowohl das Alkalimetall-carbonat wie auch das Phosphat-Additiv dem feuchten Kaliumchlorid-Rohmaterial (d.h. dem feuchten Feinsalz) vor der Trocknung in der gewünschten Menge zusetzen.

Weiterhin kann man mit dem erfindungsgemäßen Verfahren auch Kaliumchlorid-Granulate herstellen, die zusätzlich Mikronährstoffe wie B, Mn, Mo, Cu, Zn und Fe oder Gemische daraus enthalten. Die Mikronährstoffe können vor, während oder nach der Granulierung zugegeben werden. Beispielsweise kann man ein Kaliumchlorid-Rohmaterial verwenden, das bereits die gewünschte Menge an Mikronährstoffen enthält. Häufig wird man jedoch die Mikronährstoffe während des erfindungsgemäßen Verfahrens, z.B. während der Zugabe der Additive oder danach zugeben und dann das so erhaltene Kaliumchlorid-Rohmaterial granulieren. Auch können die Mikronährstoffe dem fertigen Granulat zugegeben werden, beispielweise indem man eine wässrige Lösung der Mikronährstoffe auf das Granulat aufsprüht. Die Menge an Mikronährstoffen wird in der Regel 1 Gew.-%, bezogen auf das wasserfreie Kaliumchlorid-Granulat und jeweils gerechnet als Element, nicht überschreiten. Beispielsweise kann das erfindungsgemäß erhältliche Kaliumchlorid-Granulat 0,001 bis 1 Gew.-% B enthalten.

Die eigentliche Durchführung der Granulierung kann in Analogie zu den aus dem Stand der Technik bekannten Agglomerationsverfahren erfolgen, die beispielsweise in Wolfgang Pietsch, Agglomeration Processes, Wiley - VCH, 1. Auflage, 2002 sowie in G. Heinze, Handbuch der Agglomerationstechnik, Wiley - VCH, 2000 sowie in Perry's Chemical Engineers' Handbook, 7. Auflage, McGraw-Hill, 1997, beschrieben sind.

In der Regel erfolgt die Granulierung als Press- oder auch Aufbauagglomeration.

Bei einer Granulierung mittels Aufbauagglomeration wird das behandelte Kaliumchlorid-Rohmaterial, welches das Additiv Alkalimetallcarbonat und das Phosphat-Additiv in den gewünschten Mengen enthält, durch Einwirkung mechanischer Kräfte in Bewegung versetzt und gegebenenfalls mit Wasser oder wässrigen Lösungen von Alkalimetallcarbonat und Phosphat-Additiv während des Granuliervorgangs behandelt. Hierbei kann die Aufbauagglomeration in an sich bekannter Weise als Roll-, Misch- oder Fließbett-Agglomeration, insbesondere als Roll-Agglomeration, erfolgen. Bei der Roll-Agglomeration wird man das Kaliumchlorid-Rohmaterial, das gegebenenfalls bereits die Bestandteile Alkalimetallcarbonat und Phosphat-Additiv enthält, in ein Gefäß mit geneigter Drehachse und kreisförmigem Querschnitt, vorzugsweise in eine Granuliertrommel oder auf einen Granulierteller, gegeben. Durch Rotieren des Gefäßes werden die Partikel des Feinsalzes in Bewegung versetzt. Die Behandlung mit dem Wasser bzw. den wässrigen Lösungen von Alkalimetallcarbonat und Phosphat-Additiv erfolgt beispielsweise durch Sprühen auf das in Bewegung versetzte Kaliumchlorid-Rohmaterial. Hierbei erhält man ein vergleichsweise einheitlich rundes Granulat, das direkt einer Klassierung zugeführt werden kann.

Vorzugsweise umfasst die Granulierung eine Pressagglomeration des behandelten Kaliumchlorid-Rohmaterials und eine Zerkleinerung des bei der Pressagglomeration erhaltenen Materials. Bei der Pressagglomeration wird das behandelte Kaliumchlorid-Rohmaterial unter Anwendung von Druck kompaktiert. Zum Kompaktieren eignen sich grundsätzlich alle die für ähnliche Zwecke bekannten Pressen, wie beispielsweise Stempel-, Strang-, Loch- und Walzenpressen.

Vorzugsweise erfolgt die Kompaktierung unter Verwendung einer Walzenpresse. Bei Walzenpressen erfolgt die Kompaktierung im Spalt zweier gegenläufig rotierender Walzen. Die Walzenoberflächen können glatt, profiliert, z. B. geriffelt, gewellt oder gewaffelt, oder mit Formmulden ausgestattet sein. Eine etwaige Profilierung der Walzenoberfläche dient vor allem der Verbesserung des Einzugsverhältnisses in den Walzenspalt. Häufig wird man Walzenpressen mit glatter oder profilierter Walzenoberfläche einsetzen. In diesem Falle ist das primäre Agglomerationsprodukt ein aus dem Walzenspalt austretender bandartiger Strang, der auch als Schülpe bezeichnet wird.

Die für die Kompaktierung erforderlichen Presskräfte, die üblicherweise auf die Walzenbreite bezogen und als Linienkräfte angegeben werden, liegen in der Regel im Bereich von 1 bis 75 kN/cm, insbesondere im Bereich von 40 bis 70 kN/cm und bezogen auf 1000 mm Durchmesser und einer mittleren Schülpendicke von 10 mm. In der Regel wird die Walzenpresse bei einer Walzenumfangsgeschwindigkeit im Bereich von 0,2 bis 1,6 m/s betrieben. Üblicherweise erfolgt die Kompaktierung bei Temperaturen im Bereich von 80 bis 100 °C oder bei der Temperatur, die sich aufgrund der Einwirkung der mechanischen Kräfte auf das behandelte Kaliumchlorid-Rohmaterial (d.h. das behandelte Feinsalz) einstellt. Gegebenenfalls wird man das der Granulierung zugeführte Gut auf die für die Kompaktierung gewünschte Temperatur vorwärmen bzw. hat noch Restwärme z. B. aus der Trocknung.

Gegebenenfalls kann die Pressagglomeration mehrstufig durchgeführt werden.

Bei der Pressagglomeration des behandelten Kaliumchlorid-Rohmaterials mit einer Walzenpresse werden in der Regel Schülpen erhalten, die zur Einstellung der Partikelgröße des erhaltenen Granulates einer Zerkleinerung unterworfen werden. Die Zerkleinerung der Schülpen kann in an sich bekannter Weise, beispielsweise durch Vermahlen in hierfür geeigneten Vorrichtungen erfolgen, beispielsweise in Prallbrechern, Prallmühlen oder Walzenbrechern.

In der Regel schließt sich dem eigentlichen Granuliervorgang eine Klassierung des Granulates an. Hierbei erfolgt eine Auftrennung des Granulates in Granulate mit der spezifikationsgerechten Partikelgröße, kleineren Granulaten (Feinanteil) und gegebenenfalls gröberen Granulaten (Grobanteil). Spezifikationsgerecht ist insbesondere ein Kaliumchlorid-Granulat, in dem wenigstens 90 Gew.-% der Granulatpartikel eine Partikelgröße beziehungsweise einen Partikeldurchmesser im Bereich von 0,5 bis 8 mm und insbesondere im Bereich von 2 bis 4 mm aufweisen. Die Klassierung kann nach üblichen Verfahren erfolgen, insbesondere durch Sieben.

Das bei der Klassierung anfallende, nicht spezifikationsgerechte Granulat-Material, das sogenannte Rückgut, wird in der Regel in den Prozess zurückgeführt.

In einer bevorzugten Ausführungsform der Erfindung wird man ein feuchtes Kaliumchlorid-Rohmaterial, das 2 bis 15 Gew.-%, insbesondere 4 bis 9 Gew.-% Wasser, bezogen auf die festen Bestandteile des Kaliumchlorid-Rohmaterials, enthält, mit dem wenigstens einen Alkalimetallcarbonat, insbesondere mit Natriumcarbonat-wasserfrei, und dem wenigstens einen Phosphat-Additiv, insbesondere mit Trinatriumphosphat, in der gewünschten Menge vermischen, wobei man ein behandeltes (konditioniertes) feuchtes Kaliumchlorid-Rohmaterial erhält. Hierbei können Alkalimetallcarbonat und Trinatriumphosphat in Form von Feststoffen oder in Form wässriger Lösungen eingesetzt werden. Das so erhaltene, konditionierte Kaliumchlorid-Rohmaterial wird anschließend getrocknet. Das trockene, konditionierte Kaliumchlorid-Rohmaterial wird gegebenenfalls mit dem Rückgut einer Pressagglomeration, insbesondere einer Pressagglomeration unter Verwendung einer Walzenpresse mit glatten oder profilierten Walzen, zugeführt. Das dabei erhaltene Granulat, beziehungsweise die Schülpen, wird anschließend zerkleinert und klassiert. Das bei der Klassierung anfallende Feingut wird zusammen mit dem getrockneten, konditionierten Kaliumchlorid-Rohmaterial der Pressagglomeration zugeführt.

Das so erhaltene Granulat kann in an sich bekannter Weise konfektioniert, z. B. verpackt und transportiert werden.

Die nach dem erfindungsgemäßen Verfahren erhältlichen Kaliumchlorid-Granulate enthalten naturgemäß, neben Kaliumchlorid, das Additiv Alkalimetallcarbonat und Phosphat-Additiv (bzw. deren Umwandlungsprodukte) in der im erfindungsgemäßen Verfahren eingesetzten Menge. Insbesondere besteht das erfindungsgemäß erhältliche Kaliumchlorid-Granulat zu wenigstens 90 Gew.-%, insbesondere wenigstens 95 Gew.-% und speziell wenigstens 98 Gew.-%, bezogen auf wasserfreies Granulat, aus:
i) Kaliumchlorid,
ii) dem Additiv Alkalimetallcarbonat und/oder dessen Reaktionsprodukten wie MgCO₃ oder CaCO₃, in einer Menge von 0,05 bis 1 Gew.-%, insbesondere in einer Menge von 0,1 bis 0,7 Gew.-%, bezogen auf das im Granulat enthaltene Kaliumchlorid und gerechnet als Alkalimetallcarbonat, und
iii) dem Phosphat-Additiv oder dessen Hydrolyse/Umwandlungsprodukte, in einer Menge von 0,025 bis 2 Gew.-%, insbesondere in einer Menge von 0,05 bis 1,5 Gew.-%, bezogen auf Kaliumchlorid und gerechnet als Phosphat-Additiv.

Daneben enthält das erfindungsgemäß erhältliche Kaliumchlorid-Granulat die im Kaliumchlorid-Rohmaterial/Feinsalz enthaltenen Verunreinigungen, z. B. Magnesium-Salze und/oder Calcium-Salze in den oben angegebenen Mengenverhältnissen.

Weiterhin kann das Kaliumchlorid-Granulat auch Mikronährstoffe wie B, Mn, Mo, Cu, Zn und Fe oder Gemische daraus enthalten. Die Menge an Mikronährstoffen wird in der Regel 1 Gew.%, bezogen auf das wasserfreie Kaliumchlorid-Granulat und jeweils gerechnet als Element, nicht überschreiten. Beispielsweise kann das erfindungsgemäß erhältliche Kaliumchlorid-Granulat 0,001 bis 1 Gew.-% Bor enthalten.

Wie bereits erwähnt, zeichnen sich die erfindungsgemäßen Kaliumchlorid-Granulate durch eine hohe mechanische Stabilität auch bei Lagerung in feuchter Atmosphäre, z. B. bei relativen Feuchten/Luftfeuchtigkeiten bei 70 % RH bzw. oberhalb 70 % RH aus. Auch unter diesen Bedingungen zeigen die erfindungsgemäßen Kaliumchlorid-Granulate nur ein geringes Staubverhalten und eine hohe Bruch-/Berstfestigkeit, eine geringe Feuchteaufnahme bzw. einen geringen Abrieb.

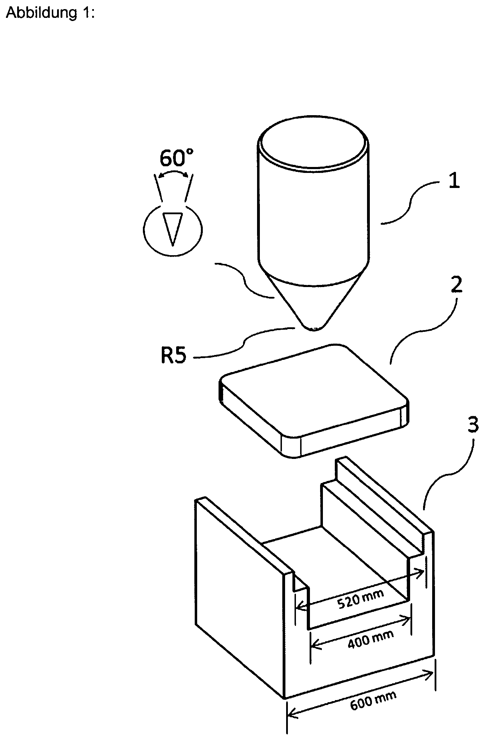

Abbildung 1 zeigt eine Versuchsanordnung zur Bestimmung der "Bruchfestigkeit" für Prüfkörper umfassend einen Prüfstempel (1) mit einer kegelförmigen Prüfspitze (R5) und einem u-förmigen Prüfkörperhalter (3), in dem der Prüfkörper (2) beidseitig fixiert ist.

### Laborversuche:

Als Kaliumchlorid-Rohmaterial (Feinsalz) wurde ein durch Heißlösen gewonnenes Kristallisat verwendet. Der Kaliumgehalt des Kaliumchlorids lag bei rund 60 Gew.-%, gerechnet als K₂O und bezogen auf Festbestandteile. Der Mg-Gehalt, gerechnet als MgCl₂ und der Ca-Gehalt, gerechnet als CaCl₂ lag in Summe bei rund 0,13 Gew.-%, bezogen auf Festbestandteile. Die Körnung des Kaliumchlorid-Rohmaterials (Feinsalzes) lag i.d.R. bei 0,01 bis 2 mm. Der Wassergehalt des feuchten Kaliumchlorid-Rohmaterials (feuchten Feinsalzes) betrug 4 - 9 Gew.-%, insbesondere 8 Gew.%, bezogen auf die Festbestandteile vor der Trocknung.

Als Alkalimetallcarbonat und Phosphat-Additiv wurde jeweils ein handelsübliches pulverförmiges Natriumcarbonat-wasserfrei, Trinatriumphosphat (ohne Kristallwasser) bzw. Natriumpyrophosphat (ohne Kristallwasser) mit einem Wassergehalt von 0,01 Gew.-% eingesetzt.

Herstellung von Prüfkörpern für die Bestimmung der Bruchfestigkeit:
Hierzu wurden 3 kg des Kaliumchlorids der oben angegebenen Spezifikation unter Zugabe von 240 g Wasser mit dem jeweiligen Additiv als Pulver in einem Intensivmischer 1 min. vermischt. Das feuchte Kaliumchlorid-Rohmaterial/Additiv-Gemisch wurde 24 h im Trockenschrank bei 105 °C getrocknet und anschließend mit einer Scheibenmühle auf eine Korngröße von < 0,8 mm desagglomeriert. Für die Vergleichsversuche "trocken" wurden die Additive nach der Trocknung und nach der Desagglomeration untergemischt.

Für die Bestimmung der Bruchfestigkeit wurden aus diesem Material quaderförmige Prüfkörper mit den Abmessungen 50 x 50 x 8 mm hergestellt. Die Herstellung der Prüfkörper (Laborversuche) erfolgte mittels einer hydraulischen Stempelpresse (Modell K50 der Fa. Komage) bei einer Presskraft von ca. 290 kN, wie in Abbildung 1 schematisch dargestellt.

Bestimmung der Bruchfestigkeit (Punktlast) der Prüfkörper:
Die unbewetterten Prüfkörper wurden unmittelbar nach ihrer Herstellung vermessen.

Zur Bewetterung wurden die frisch hergestellten Prüfkörper gewogen und anschließend wie folgt bewettert: Die Prüfkörper wurden in Probenhaltern vertikal fixiert und in einem Klimaschrank 72 h bei 20 °C und 70 % relative Luftfeuchte gelagert.

Unmittelbar nach ihrer Entnahme aus dem Klimaschrank wurden die so bewetterten Prüfkörper zur Bestimmung der Wasser/-Feuchteaufnahme erneut gewogen und anschließend wurde sofort die Bruchfestigkeit bestimmt.

Die Bestimmung der Bruchfestigkeit über eine Punktlast erfolgte in Anlehnung an ASTM D5731:2008 (Point load strenght index). Hierzu wurden die quadratischen Prüfkörper (2) in dem u-förmigen Probenhalter (3) des in Abbildung 1 schematisch gezeigten Prüfgerätes beidseitig so fixiert, dass die Prüfspitze (R5) auf die Mitte des quadratischen Prüfkörpers (2) ausgerichtet war. Dann wurde die Prüfspitze mit einer Geschwindigkeit von 1 mm/min auf den Prüfkörper gedrückt und mittels eines Druckmessers die dabei auf den Prüfkörper ausgeübte Kraft bestimmt. Ermittelt wird der Wert der Maximalbelastung auf den Prüfkörper unmittelbar vor dem Bruch des Prüfkörpers, der durch einen Abfall der Kraft gegen null gekennzeichnet ist. Die Prüfspitze war kegelförmig mit einem Kegelwinkel von 60°. Die Spitze weist einen Radius von 5 mm auf (vgl. Abb. 1).

Es wurden jeweils 10 Prüfkörper (bewettert/unbewettert) gemessen. Die in der Tabelle 1 angegebenen Werte für die Bruchfestigkeiten (Punktlast) sind Mittelwerte aus 10 Messungen.

**Tab.1: Bruchfestigkeiten von Prüfkörpern aus Kaliumchlorid-Rohmaterial und den Additiven Natriumcarbonat wasserfrei und Trinatriumphosphat (wasserfrei) bzw. Pyrophosphate (wasserfrei), Laborversuche (quadratische Prüfkörper):**

| # | Additive | Punktlasten - unbewettert | Punktlastenbewettert** | Feuchteaufnahme bei 70% RH ** |
|---|---|---|---|---|
| 1* | 0,16 Gew.% A11 + 0,32 Gew.% P941 | 0,40 kN | 0,32 kN | 0,18 % |
| 2* | 0,16 Gew.% A11 + 0,16 Gew.% P941 | 0,43 kN | 0,31 kN | 0,09 % |
| 3* | 0,16 Gew.% A11 + 0,08 Gew.% P941 | 0,36 kN | 0,26 kN | 0,14 % |
| V4* | 0,32 Gew.% P941 | 0,38 kN | 0,30 kN | 0,22 % |
| V5* | 0,16 Gew.% P941 | 0,39 kN | 0,25 kN | 0,34 % |
| V6* | 0,08 Gew.% P941 | 0,38 kN | 0,22 kN | 0,50 % |
| V7* | 0,04 Gew.% P941 | 0,36 kN | 0,20 kN | 0,71 % |
| V8 | 0,32 Gew.% P941 trocken | 0,38 kN | 0,22 kN | 0,34 % |
| V9* | 0,13 Gew.% A11 | 0,33 kN | 0,19 kN | 0,41 % |
| V10 | 0,16 Gew.% A11 trocken | 0,33 kN | 0,15 kN | 0,68 % |
| V11 | 0,16 Gew.% A11 (trocken) + 0,32 Gew.% P941 (trocken) | 0,37 kN | 0,22 kN | 0,22 % |
| V12 | Kaliumchlorid-Rohmaterial (ohne Additiv) | 0,34 kN | 0,17 kN | 0,63 % |
| 13* | 0,16 Gew.% A11 + 0,16 Gew.% P941 + 0,20 Gew.% P945 | 0,35 kN | 0,26 kN | 0,14 % |

| | | | | |
|---|---|---|---|---|
| *jeweils mit 8 Gew.-% Wasser; ** Bewettert 72 h, 20 °C, 70 % RH; # = Versuchsnummer; V = Vergleichsversuch; A11 = Natriumcarbonat wasserfrei; P941 = Trinatriumphosphat (wasserfrei), P945 = Natriumpyrophosphat (wasserfrei) | | | | |

### Fabrikbetriebsversuch:

Zur Herstellung von Kaliumchlorid-Granulat im Fabrikbetriebsversuch wurde feuchtes Kaliumchlorid-Rohmaterial (d.h. feuchtes Feinsalz) mit einer Restfeuchte von 2 - 15 Gew.-% ggf. über einen Mischer der Trocknung zugeführt. Die erfindungsgemäßen Additive wurden zum Beispiel im eingebauten Mischer zugegeben und das Gemisch wurde homogenisiert. Das behandelte Feinsalz wurde dann der Trocknung zugeführt und anschließend ggf. mit dem Pressenrückgut in der Granulierung auf die Pressen aufgegeben. Nach Klassierung/Zerkleinerung erhielt man das Gutkorn, das verkaufsfähige Kaliumchloridgranulat. Dieses Granulat ist u. a., sofern der Kaliumchloridgehalt mindestens 60,0 % K₂O beträgt, als handelsübliches "60er MOP-Gran" bekannt.

Für die Pressagglomeration in der Produktion wurden mehrere Walzenpressen mit Rückgutkreislauf eingesetzt. Die einzelnen Walzenpressen sind folgenderweise aufgebaut: zwei gegenläufig rotierende Walzen weisen eine Waffelprofilierung auf der Walzenoberfläche (typischer Walzendurchmesser 1000 mm, typische Arbeitsbreite 1000 mm, Spaltbreite typischerweise ca. 15 mm) auf. Die Presse wurde mit einer Linienkraft von rund 60 kN/cm und einer Walzendrehzahl von 18 U/min betrieben. Die Zufuhr des Feinsalzes erfolgte in der Regel mittels eines zentralen Kettenförderers und der über den Pressen angeordneten Stopfschnecken.

Die in der Walzenpresse anfallenden Schülpen wurden mittels einer Prallmühle zerkleinert. Anschließend wurde das Material mit einer handelsüblichen Siebvor-richtung klassiert, die Fraktion mit Korngröße 2 - 4 mm (Produkt) abgetrennt, die Fraktion mit Korngröße < 2 mm zur Aufgabe zurückgeführt (Feingut) und der Anteil mit Korngröße > 4 mm (Grobgut) aufgemahlen und erneut gesiebt.

Für die Bestimmung der Berstfestigkeit der Granulate wurde eine Testfraktion (Testgranulat) mit einer Korngröße von 2,5 - 3,15 mm ausgesiebt.

Das unbewetterte Testgranulat wurde parallel zum bewetterten Granulat vermessen.

Zur Bewetterung wurden etwa 9 g des hergestellten Testgranulats in eine Petrischale gegeben und gewogen. Zur Konditionierung wurde die Petrischale in einem Klimaschrank 24 h bei 20 °C und 70, 71, 72 bzw. 73 relative Luftfeuchte gelagert. Unmittelbar nach ihrer Entnahme aus dem Klimaschrank wurde die Petrischale mit Testgranulat zur Bestimmung der Wasseraufnahme erneut gewogen und anschließend wurde sofort die Bruchfestigkeit des Granulats nach der folgenden Methode bestimmt.

Die mittleren Berstfestigkeiten wurde mit Hilfe des Tabletten-Berstfestigkeitstesters Typ TBH 425D der Firma ERWEKA auf Basis von Messungen an 56 Einzelagglomeraten unterschiedlicher Partikelgröße (Fraktion 2,5 - 3,15 mm) ermittelt und der Mittelwert berechnet. Bestimmt wurde die Kraft, die erforderlich war, um das Granulat zwischen Stempel und Platte des Bruchfestigkeitstesters zu zerbrechen. Granulatpartikel mit einer Berstfestigkeit > 400 N und solche mit einer Berstfestigkeit < 4 N wurden bei der Mittelwertbildung nicht berücksichtigt.

Bei dem in Tab.2 aufgeführten Fabrikbetriebsversuch wurde Kaliumchlorid-Rohmaterial mit folgender Spezifikation eingesetzt: KCI-Gehalt rund 61 % K₂O, ca. 0,2 Gew.-% MgCl₂/CaCl₂-Gehalt, die Restfeuchten des (feuchten) Kaliumchlorid-Rohmaterials betragen i.d.R. 5,7 - 6,2 Gew.-%. Die verarbeiteten Mengen belaufen sich auf rund 90 t/h Kaliumchlorid-Rohmaterial.

**Tabelle 2: Fabrikbetriebsversuche Kaliumchlorid-Granulat mit Natriumcarbonat wasserfrei und Trinatriumphosphat - Dodecahydrat aus filterfeuchtem Kaliumchlorid(KCl)-Rohmaterial* bei unterschiedlicher Bewetterung (Berstfestigkeiten in N und Feuchteaufnahme in %)**

| | Additive | unbewettert | 1 d / 70 %RH | 1 d / 71 %RH | 1 d / 72 %RH | 1 d / 73 %RH |
|---|---|---|---|---|---|---|
| 14* | 0,16 Gew.% A11 + 0,15 Gew.% P942 | 77 N | 46 N | 28 N | 18 N | 14 N |
| | | | 0,11 % | 0,56 % | 2,7 % | 5,5 % |
| V15* | 0,13 Gew.% P942 | 80 N | 19 N | 14 N | < 10 N | |
| | | | 0,44 % | 1,28 % | 3,9 % | |
| V16* | KCI-Rohmaterial (ohne Additiv) | 62 N | 14 N | < 10 N | | |
| | | | 1,34 % | 3,14 % | | |

| | | | | | | |
|---|---|---|---|---|---|---|
| # = Versuchsnummer; 1 d / 70 % RH = 1 Tag Lagerung bei 70 % relativer Feuchte 1 d / 71 % RH = 1 Tag Lagerung bei 71 % relativer Feuchte 1 d / 72 % RH = 1 Tag Lagerung bei 72 % relativer Feuchte 1 d / 73 % RH = 1 Tag Lagerung bei 73 % relativer Feuchte *jeweils mit etwa 6 Gew.-% Wasser; A11 = Natriumcarbonat wasserfrei; P942 = Trinatriumphosphat-Dodecahydrat | | | | | | |

Tabelle 2 zeigt die im Vergleich die besondere Wirkung der Kombination Natriumcarbonat wasserfrei und Trinatriumphosphat-Dodecahydrat im Vergleich zum einzelnen Trinatriumphosphat-Dodecahydrat . Das Produkt aus Versuch 14 zeigt deutlich bessere Berstfestigkeiten - auch bei höheren relativen Luftfeuchtigkeiten (relativen Feuchten) - als die Produkte aus den Vergleichsversuchen V15 und V16. Die Feuchteaufnahme ist nach einem Tag bei 0,11 % (70% rel. Feuchte) und 0,56 % (71% rel. Feuchte).

**Tabelle 3: Fabrikbetriebsversuche Kaliumchlorid-Granulat mit Natriumcarbonat-wasserfrei und Trinatriumphosphat (wasserfrei) aus filterfeuchtem Kaliumchlorid(KCl)-Rohmaterial* bei unterschiedlicher Bewetterung (Bruchfestigkeiten in N und Feuchteaufnahme in %)**

| | Additive | unbewet tert | 1 d / 70 %RH | 1 d / 72 %RH | 1 d / 73 %RH | 1 d / 74 %RH |
|---|---|---|---|---|---|---|
| 17* | 0,16 Gew.% A11 + 0,15 Gew.% P941 | 90 N | 52 N | 20 N | 16 N | 12 N |
| | | | 0,09 % | 3,0 % | 3,9 % | 4,8 % |
| 18* | 0,16 Gew.% A11 + 0,08 Gew.% P941 | 82 N | 50 N | 19 N | 19 N | 17 N |
| | | | 0,10 % | 3,1 % | 3,9 % | 5,1 % |
| V19* | 0,15 Gew.% P941 | 91 N | 46 N | <10 N | | |
| | | | 0,11 % | 3,6 % | | |
| V20* | 0,30 Gew.% P941 | 88 N | 44 N | <10 N | | |
| | | | 0,09 % | 3,5 % | | |
| V21* | 0,16 Gew.% A11 | 89 N | 45 N | < 10 N | < 10 N | |
| | | | 0,10 % | 3,1 % | 4,3 % | |
| V22* | KCI-Rohmaterial (ohne Additiv) | 62 N | 14 N | <10 N | | |
| | | | 1,34 % | 3,14 % | | |

| | | | | | | |
|---|---|---|---|---|---|---|
| # = Versuchsnummer; 1 d / 70 % RH = 1 Tag Lagerung bei 70 % relativer Feuchte 1 d / 72 % RH = 1 Tag Lagerung bei 72 % relativer Feuchte 1 d / 73 % RH = 1 Tag Lagerung bei 73 % relativer Feuchte 1 d / 74 % RH = 1 Tag Lagerung bei 74 % relativer Feuchte *jeweils mit etwa 6 Gew.-% Wasser; A11 = Natriumcarbonat wasserfrei; P941 = Trinatriumphosphat (wasserfrei) | | | | | | |

Tabelle 3 zeigt die im Vergleich die besondere Wirkung der Kombination Natriumcarbonat (wasserfrei) und Trinatriumphosphat (wasserfrei) im Vergleich zum einzelnen Trinatriumphosphat (wasserfrei). Die Produkte aus den Versuchen 17 und 18 zeigen eine bessere Bruchfestigkeit - auch bei höheren relativen Luftfeuchtigkeiten (relativen Feuchten) - als die Produkte aus den Vergleichsversuchen V19, V20, V21 und V22. Die Feuchteaufnahme ist nach einem Tag bei 0,09 % bzw. 0,10 % (70% rel. Feuchte) und 3,0 % bzw. 3,1 % (72% rel. Feuchte).

**Tabelle 4: Laborversuche mit Kaliumchlorid-Granulat mit den Additiven Natriumcarbonat wasserfrei und Trinatriumphosphat (wasserfrei) und Mikronährstoffen****

| | Additive | Punktlasten - unbewettert | Punktlasten - bewettert | Feuchteaufnahme |
|---|---|---|---|---|
| 23* | 0,16 Gew.% A11 + 0,32 Gew.% P941+ 0,5 Gew.% B | 0,39 kN | 0,41 kN | 0,16% |

| | | | | |
|---|---|---|---|---|
| *mit 8 Gew.-% Wasser; ** Vergleichsversuche siehe Nr. 1 und V11 A11 = Natriumcarbonat (wasserfrei); P941 = Trinatriumphosphat (wasserfrei), B = Borax (wasserfrei), gerechnet als Bor | | | | |

## Patentansprüche

1. Verfahren zur Herstellung von Kaliumchlorid-Granulaten aus einem kristallinen Kaliumchlorid-Rohmaterial, wobei man das Kaliumchlorid-Rohmaterial vor der Granulierung mit wenigstens einem Alkalimetallcarbonat und wenigstens einem Phosphat-Additiv, das ausgewählt ist unter Alkalimetallmonophosphaten, Alkalimetallpyrophosphaten, linearen Alkalimetallpolyphosphaten und deren Gemischen, in Gegenwart von Wasser behandelt, wobei der Gehalt an Wasser während der Behandlung des kristallinen Kaliumchlorid-Rohmaterials mit dem Alkalimetallcarbonat und dem Phosphat-Additiv im Bereich von 2 bis 15 Gew.-%, bezogen auf die festen Bestandteile des Kaliumchlorid-Rohmaterials, liegt,
wobei man das Alkalimetallcarbonat in einer Menge von 0,05 bis 1 Gew.-% und das Phosphat-Additiv in einer Menge von 0,025 bis 2 Gew.-%, bezogen auf die festen Bestandteile des Kaliumchlorid-Rohmaterials, einsetzt.

2. Verfahren nach Anspruch 1, wobei das Alkalimetallcarbonat ausgewählt ist unter Natriumcarbonat-wasserfrei, Natriumcarbonat-Monohydrat und Natriumcarbonat-Decahydrat, wobei es sich insbesondere um Natriumcarbonat-wasserfrei handelt.

3. Verfahren nach Anspruch 1 oder 2, wobei das Phosphat-Additiv ausgewählt ist unter Trinatriumphosphat, Trinatriumphosphat-Dodecahydrat, Trinatriumphosphat-Hexahydrat, Natriumpyrophoshat, Natriumpyrophosphat-Dodecahydrat, Natriumtripolyphosphat (STPP), wobei es sich insbesondere um Trinatriumphosphat handelt.

4. Verfahren nach einem der vorhergehenden Ansprüche, wobei man das Alkalimetallcarbonat in einer Menge von 0,1 bis 0,7 Gew.-%, bezogen auf die festen Bestandteile des Kaliumchlorid-Rohmaterials, einsetzt.

5. Verfahren nach einem der vorhergehenden Ansprüche, wobei man das Phosphat-Additiv in einer Menge von 0,05 bis 1,5 Gew.-%, bezogen auf die festen Bestandteile des Kaliumchlorid-Rohmaterials, einsetzt.

6. Verfahren nach einem der vorhergehenden Ansprüche, wobei der Gehalt an Wasser während der Behandlung des kristallinen Kaliumchlorid-Rohmaterials mit dem Alkalimetallcarbonat und dem Phosphat-Additiv im Bereich von 4 bis 9 Gew.-%, bezogen auf die festen Bestandteile des Kaliumchlorid-Rohmaterials, liegt.

7. Verfahren nach einem der vorhergehenden Ansprüche, wobei man das Alkalimetallcarbonat in Form eines Pulvers und/oder in Form einer wässrigen Lösung einsetzt.

8. Verfahren nach einem der vorhergehenden Ansprüche, wobei man das Phosphat-Additiv in Form eines Pulvers und/oder in Form einer wässrigen Lösung einsetzt.

9. Verfahren nach einem der vorhergehenden Ansprüche, wobei das Kaliumchlorid-Rohmaterial 0,01 bis 1,0 Gew.-%, insbesondere 0,1 bis 0,7 Gew.-% Magnesiumsalze und Calciumsalze sowie deren Mischungen, insbesondere als MgCl₂ und CaCl₂ vorliegend, jeweils bezogen auf KCI und gerechnet als MgCl₂, bzw. CaCl₂, enthält.

10. Verfahren nach einem der vorhergehenden Ansprüche, wobei man zur Granulierung ein Kaliumchlorid-Rohmaterial einsetzt, worin wenigstens 90 Gew.-% pulverförmigen Kaliumchlorid-Rohmaterials eine Partikelgröße im Bereich kleiner 2 mm aufweisen.

11. Verfahren nach einem der vorhergehenden Ansprüche, wobei das Granulieren eine Pressagglomeration des Kaliumchlorid-Rohmaterials umfasst.

12. Verfahren nach einem der vorhergehenden Ansprüche, wobei man das Alkalimetallcarbonat einem feuchten Kaliumchlorid-Rohmaterial zusetzt.

13. Verfahren nach einem der vorhergehenden Ansprüche, wobei man das Phosphat-Additiv einem feuchten Kaliumchlorid-Rohmaterial zusetzt.

14. Verfahren nach Anspruch 12 oder 13, wobei das feuchte Kaliumchlorid-Rohmaterial nach dem Zusatz des Alkalimetallcarbonates und des Phosphat-Additivs vor der Granulierung getrocknet wird.

15. Verfahren nach einem der vorhergehenden Ansprüche, wobei man dem Kaliumchlorid-Rohmaterial vor oder während des Granulierens wenigstens einen Mikronährstoff, insbesondere einen Bor-haltigen Mikronährstoff zusetzt.

16. Kaliumchlorid-Granulat, erhältlich durch ein Verfahren nach einem der Ansprüche 1 bis 15.

17. Verwendung einer Kombination aus wenigstens einem Alkalimetallcarbonat, wenigstens einem Phosphat-Additiv, das ausgewählt ist unter Alkalimetallmonophosphaten, Alkalimetallpyrophosphaten, linearen Alkalimetallpolyphosphaten und deren Gemischen, und Wasser zur Verringerung der Feuchteaufnahme von Kaliumchlorid-Granulaten.

18. Verwendung einer Kombination aus wenigstens einem Alkalimetallcarbonat, wenigstens einem Phosphat-Additiv, das ausgewählt ist unter Alkalimetallmonophosphaten, Alkalimetallpyrophosphaten, linearen Alkalimetallpolyphosphaten und deren Gemischen, und Wasser zur Erhöhung der Bruch-/ bzw. Berstfestigkeit von Kaliumchlorid-Granulaten, die hoher Luftfeuchtigkeit bei 70% RH (relative Luftfeuchte) oder höher ausgesetzt sind.

## Claims

1. A process for the preparation of potassium chloride granulate from a crystalline potassium chloride raw material, comprising the steps of treating the potassium chloride raw material prior to granulation with at least one alkali metal carbonate and at least one phosphate additive, selected from alkali metal monophosphates, alkali metal pyrophosphates, linear alkali metal polyphosphates and mixtures thereof, in the presence of water,
wherein the content of water during the treatment of the crystalline potassium chloride raw material with the alkali metal carbonate and the phosphate additive is in the range from 2 to 15% by weight, relative to the solid portion of the potassium chloride raw material,
wherein the alkali metal carbonate is used in an amount of from 0.05 to 1% by weight and the phosphate additive is used in an amount of from 0.025 to 2% by weight, relative to the solid portion of the potassium chloride raw material.

2. The process according to claim 1, wherein the alkali metal carbonate is selected from anhydrous sodium carbonate, sodium carbonate monohydrate and sodium carbonate decahydrate, wherein the alkali metal carbonate is particularly anhydrous sodium carbonate.

3. The process according to claim 1 or 2, wherein the phosphate additive is selected from tri-sodium phosphate, tri-sodium phosphate-dodecahydrate, tri-sodium phosphate-hexahydrate, sodium pyrophosphate, sodium pyrophosphate-dodecahydrate and sodium-tri polyphosphate (STPP), wherein the phosphate additive is particularly tri-sodium phosphate.

4. The process according to any one of the preceding claims, wherein a quantity of 0.1% to 0.7% by weight of the alkali metal carbonate, relative to the solid portion of the potassium chloride raw material, is used.

5. The process according to any one of the preceding claims, wherein a quantity of 0.05% to 1.5% by weight of the phosphate additive, relative to the solid portion of the potassium chloride raw material, is used.

6. The process according to any one of the preceding claims, wherein the water content during the treatment of the crystalline potassium chloride raw material with the alkali metal carbonate and the phosphate additive lies in the range of 4 to 9% by weight, relative to the solid portion of the potassium chloride raw material.

7. The process according to any one of the preceding claims, wherein the alkali metal carbonate is used in the form of a powder and/or an aqueous solution.

8. The process according to any one of the preceding claims, wherein the phosphate additive is used in the form of a powder and/or an aqueous solution.

9. The process according to any one of the preceding claims, wherein the potassium chloride raw material contains 0.01 to 1.0% by weight, in particular 0.1 to 0.7% by weight, of magnesium salts and calcium salts as well as mixtures thereof, in particular present as MgCl₂ and CaCl₂, in each case relative to KCl and calculated as MgCl₂, or CaCl₂.

10. The process according to any one of the preceding claims, wherein potassium chloride raw material is used for granulation, wherein at least 90% by weight of the potassium chloride powder raw material has a particle size less than 2 mm.

11. The process according to any one of the preceding claims, wherein the granulation encompasses a press agglomeration of the potassium chloride raw material.

12. The process according to any one of the preceding claims, wherein the alkali metal carbonate is added to a moist potassium chloride raw material.

13. The process according to any one of the preceding claims, wherein the phosphate additive is added to a moist potassium chloride raw material.

14. The process according to claim 12 or 13, wherein the moist potassium chloride raw material is dried after the addition of the alkali metal carbonate and the phosphate additive and before the granulation.

15. The process according to any one of the preceding claims, wherein at least one micronutrient, in particular a micronutrient containing boron, is added to the potassium chloride raw material before or during the granulation.

16. Potassium chloride granulate, obtainable by a process in accordance with any one of claims 1 to 15.

17. Use of a combination of at least one alkali metal carbonate, at least one phosphate additive, selected from alkali metal monophosphates, alkali metal pyrophosphates, linear alkali metal polyphosphates as well as mixtures thereof, and water for reducing a moisture uptake of potassium chloride granulate.

18. Use of a combination of at least one alkali metal carbonate, at least one phosphate additive, selected from alkali metal monophosphates, alkali metal pyrophosphates, linear alkali metal polyphosphates as well as mixtures thereof, and water for increasing the breaking strength or bursting strength of potassium chloride granulate upon exposure to elevated humidity levels of 70 % RH (relative humidity) or higher.

## Revendications

1. Procédé de préparation de granulés de chlorure de potassium à partir d'une matière première cristalline de chlorure de potassium, dans lequel on traite la matière première de chlorure de potassium avant la granulation par au moins un carbonate de métal alcalin et au moins un additif de phosphate, qui est choisi parmi les monophosphates de métal alcalin, les pyrophosphates de métal alcalin, les polyphosphates linéaires de métal alcalin et leurs mélanges, en présence d'eau, la teneur en eau pendant le traitement de la matière première cristalline de chlorure de potassium par le carbonate de métal alcalin et l'additif de phosphate se situant dans la plage de 2 à 15% en poids, par rapport aux constituants solides de la matière première de chlorure de potassium, le carbonate de métal alcalin étant utilisé en une quantité de 0,05 à 1% en poids et l'additif de phosphate étant utilisé en une quantité de 0,025 à 2% en poids, par rapport aux constituants solides de la matière première de chlorure de potassium.

2. Procédé selon la revendication 1, dans lequel le carbonate de métal alcalin est choisi parmi le carbonate de sodium anhydre, le carbonate de sodium monohydraté et le carbonate de sodium décahydraté, dans lequel il s'agit en particulier de carbonate de sodium anhydre.

3. Procédé selon la revendication 1 ou 2, dans lequel l'additif de phosphate est choisi parmi le phosphate trisodique, le phosphate trisodique dodécahydraté, le phosphate trisodique hexahydraté, le pyrophosphate de sodium, le pyrophosphate de sodium dodécahydraté, le tripolyphosphate sodique (STPP), dans lequel il s'agit en particulier de phosphate trisodique.

4. Procédé selon l'une des revendications précédentes, dans lequel on utilise le carbonate de métal alcalin en une quantité de 0,1 à 0,7% en poids, par rapport aux constituants solides de la matière première de chlorure de potassium.

5. Procédé selon l'une des revendications précédentes, dans lequel on utilise l'additif de phosphate en une quantité de 0,05 à 1,5% en poids, par rapport aux constituants solides de la matière première de chlorure de potassium.

6. Procédé selon l'une des revendications précédentes, dans lequel la teneur en eau pendant le traitement de la matière première cristalline de chlorure de potassium par le carbonate de métal alcalin et l'additif de phosphate se situe dans la plage de 4 à 9% en poids, par rapport aux constituants solides de la matière première de chlorure de potassium.

7. Procédé selon l'une des revendications précédentes, dans lequel on utilise le carbonate de métal alcalin sous la forme d'une poudre et/ou sous la forme d'une solution aqueuse.

8. Procédé selon l'une des revendications précédentes, dans lequel on utilise l'additif de phosphate sous la forme d'une poudre et/ou sous la forme d'une solution aqueuse.

9. Procédé selon l'une des revendications précédentes, dans lequel la matière première de chlorure de potassium contient 0,01 à 1,0% en poids, en particulier 0,1 à 0,7% en poids de sels de magnésium et de sels de calcium ainsi que de leurs mélanges, se trouvant en particulier sous la forme de MgCl₂ et de CaCl₂, à chaque fois par rapport au KCl et calculé sous la forme de MgCl₂ ou, selon le cas, de CaCl₂.

10. Procédé selon l'une des revendications précédentes, dans lequel on utilise pour la granulation une matière première de chlorure de potassium dans laquelle au moins 90% en poids de la matière première de chlorure de potassium sous la forme de poudre présentent une grosseur de particule dans la plage inférieure à 2 mm.

11. Procédé selon l'une des revendications précédentes, dans lequel la granulation comprend une agglomération par pressage de la matière première de chlorure de potassium.

12. Procédé selon l'une des revendications précédentes, dans lequel on ajoute le carbonate de métal alcalin à une matière première humide de chlorure de potassium.

13. Procédé selon l'une des revendications précédentes, dans lequel on ajoute l'additif de phosphate à une matière première humide de chlorure de potassium.

14. Procédé selon la revendication 12 ou 13, dans lequel la matière première de chlorure de potassium humide est séchée après l'ajout du carbonate de métal alcalin et de l'additif de phosphate, avant la granulation.

15. Procédé selon l'une des revendications précédentes, dans lequel on ajoute à la matière première de chlorure de potassium, avant ou pendant la granulation, au moins un micronutriment, en particulier un micronutriment contenant du bore.

16. Granulé de chlorure de potassium, pouvant être obtenu par un procédé selon l'une des revendications 1 à 15.

17. Utilisation d'une combinaison d'au moins un carbonate de métal alcalin, d'au moins un additif de phosphate, qui est choisi parmi les monophosphates de métal alcalin, les pyrophosphates de métal alcalin, les polyphosphates linéaires de métal alcalin et leurs mélanges, et d'eau pour la diminution de l'absorption d'humidité de granulés de chlorure de potassium.

18. Utilisation d'une combinaison d'au moins un carbonate de métal alcalin, d'au moins un additif de phosphate, qui est choisi parmi les monophosphates de métal alcalin, les pyrophosphates de métal alcalin, les polyphosphates linéaires de métal alcalin et leurs mélanges, et d'eau pour l'augmentation de la résistance à la rupture ou, selon le cas, à l'éclatement de granulés de chlorure de potassium qui sont soumis à une humidité élevée de l'air de 70% de HR (humidité relative) ou plus.
